# FASCICULE DE BREVET EUROPEEN

(11) **EP 1 276 283 B1**
(45) Date de publication et mention de la délivrance du brevet: **26.03.2008**
(21) Numéro de dépôt: 02291671.2
(22) Date de dépôt: 04.07.2002
(51) Int. Cl.: H04L 12/56, H04L 29/14

(54) **Système de routage inter systèmes autonomes tolérant aux fautes**
Fehlertolerantes System zur Leitweglenkung in inter-autonomen Systemen
Fault tolerant system for inter-autonomous systems routing

(30) Priorité: 09.07.2001 FR 0109086
(43) Date de publication de la demande: 15.01.2003
(73) Titulaire: Alcatel Lucent, 75008 Paris (FR)
(72) Inventeur: Rombeaut, Jean-Pierre, 59600 Maubeuge (FR); Mongazon-Cazavet, Bruno, 91240 St Michel-Sur-Orge (FR)
(74) Mandataire: Chaffraix, Sylvain

(56) Documents cités:
- WO-A-02/47329
- US-A- 6 065 062
- TSUCHIYA P F: "TEAM-OF-GATEWAYS: DESIGN AND IMPLEMENTATION" CRISIS COMMUNICATIONS: THE PROMISE AND REALITY. WASHINGTON, OCT. 19 - 22, 1987, PROCEEDINGS OF THE MILITARY COMMUNICATIONS CONFERENCE. (MILCOM), NEW YORK, IEEE, US, vol. 1 CONF. 6, 1987, pages 39-42, XP000619284

## Description

La présente invention est relative à la continuité de service d'un système de routage au sein d'un réseau de type Internet. Plus précisément, l'invention concerne le routage inter systèmes autonomes conformément au protocole BGP (*Border Gateway Protocol*) tel que défini par le RFC (*Request For Comments*) 1771 de l'IETF (*Internet Engineering Task Force*). Elle s'applique aussi aux versions antérieures de ce protocole telles EGP *(Exterior Gateway Protocol*) défini par le RFC 904 de l'IETF.

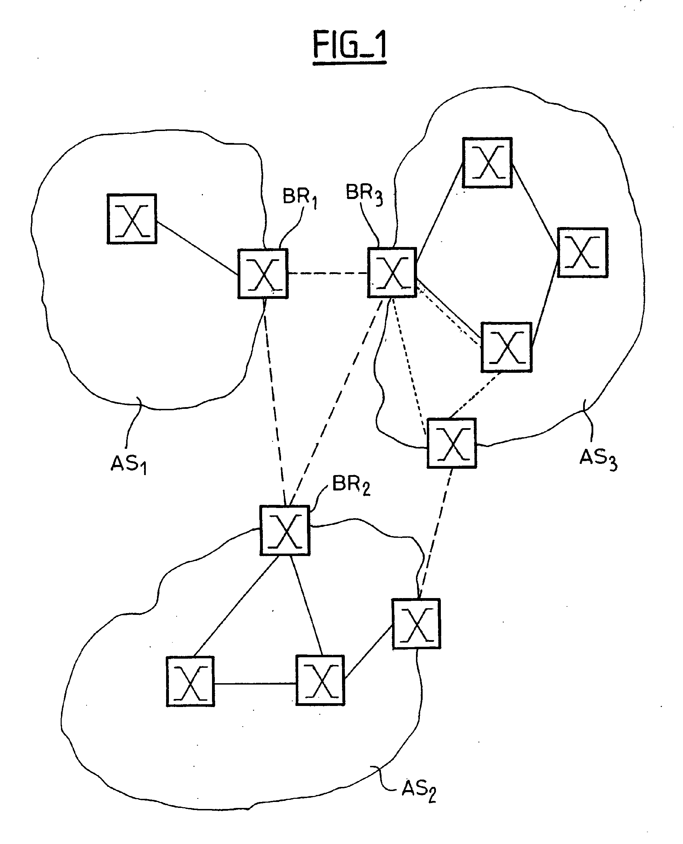

Tel qu'illustré par la figure 1, un tel réseau est composé de systèmes autonomes (ou AS pour *Autonomous system*), AS₁, AS₂, AS₃. Chaque système autonome possède un plan de routage cohérent et unique vis-à-vis des autres systèmes de routage.
On distingue deux sortes de protocoles de routage :
- Des protocoles intra-système autonome qui visent à établir ces plans de routage au sein d'un système autonome. Un exemple d'un tel protocole de routage est OSPF (*Open Shortest Path First)* défini par le RFC 2328 de l'IETF.
- Des protocoles inter systèmes autonomes qui visent à échanger ces plans de routage afin de permettre le routage entre systèmes autonomes.

Sur la figure 1, les traits continus entre les routeurs représentent les communications selon le protocole OSPF.

Les protocoles de routage inter systèmes autonomes, tels BGP, sont typiquement mis en oeuvre par des routeurs de bord, BR₁, BR₂, BR₃. Ces routeurs de bord peuvent communiquer entre eux et ainsi, s'échanger des informations de routage. Ils forment donc un sous-réseau. Le comportement de ce protocole BGP dans le cas de communication entre routeurs de bord de systèmes autonomes différents est connu sous le nom de EBGP (*Exterior Border Gateway Protocol*) et est représenté sur la figure 1, par des tirets discontinus.
Accessoirement, ce sous-réseau peut aussi comprendre des routeurs intra-système autonome mettant en oeuvre le protocole de routage IBGP (*Interior Gateway Protocol*) qui est le comportement du protocole BGP pour les routeurs intra-système autonome. Les communications selon ce protocole sont représentés par des pointillés sur la figure 1.

Typiquement, dans le cas des protocoles de type BGP (c'est-à-dire incluant IBGP, EBGP...), les informations de routage échangées sont des routes.
Chaque autre routeur (notamment de bord) avec lequel un routeur de bord communique est appelé par la suite, routeur pair ou, plus simplement pair.

Cela implique donc que ces routeurs de bord sont des éléments cruciaux du réseau. Si, à la suite d'une défaillance par exemple, ils sont amenés à ne plus pouvoir fournir leur service de routage, le fonctionnement du réseau est compromis, ou en tout état de cause, nécessite une réorganisation qui peut être pénalisante.
EP1342340-B1, revendiquant la priorité de US6910148-B1 déposé le 7 décembre 2000, divulgue un système de routage conforme au préambule de la revendication 1.
Aussi, il importe d'assurer la continuité du service de routage, en particulier fourni par les routeurs de bord.
Pour ce faire, l'invention a pour objet, un système de routage selon la revendication 1.
Selon une mise en oeuvre de l'invention, ces modules de routage sont conformes à un protocole de type BGP.

Selon une mise en oeuvre de l'invention, chaque module de routage comporte :
- un moyen pour, à l'état actif, mémoriser des informations relatives à son état et au routeur pair associé, et
- un moyen pour récupérer ces informations lors d'un basculement de ce module de routage vers l'état actif.

Ainsi, par ce mécanisme de redondance et de mémorisations des informations possédées par les modules de routage actifs et en veille, le service de routage sera constamment en fonctionnement. En cas de défaillance, le sous-réseau continuera de fonctionner normalement, sans qu'il y ait de répercussion de cette défaillance sur son comportement.

L'invention et ses avantages apparaîtront de façon plus claire dans la description qui va suivre d'une mise en oeuvre de l'invention, en liaison avec les figures jointes.
La figure 1, déjà commentée, illustre l'architecture typique d'un réseau de type Internet.
La figure 2 représente la machine à états correspondant au protocole BGP.

Classiquement, le système de routage inter systèmes autonomes selon l'invention est mis en oeuvre au sein d'un routeur Internet. Plus précisément encore, il peut être mis en oeuvre au sein d'un routeur de bord.
Toutefois, le système de routage inter systèmes autonomes peut aussi être mis en oeuvre au sein d'un routeur intra-système autonome ou même au sein d'un équipement différent d'un routeur. Autrement dit, il s'applique aussi aux protocoles IBGP et EBGP.

Le protocole BGP peut être représenté par une machine à états finis. Une telle machine à états finis peut être définie pour chaque pair auquel le système de routage inter systèmes autonomes est connecté. Ainsi sur la figure 1, le routeur de bord BR₁ a deux ensembles de modules de routage pour chaque pair BR₂ et BR₃, chacun de ces modules de routage mettant en oeuvre une machine à états finis BGP.

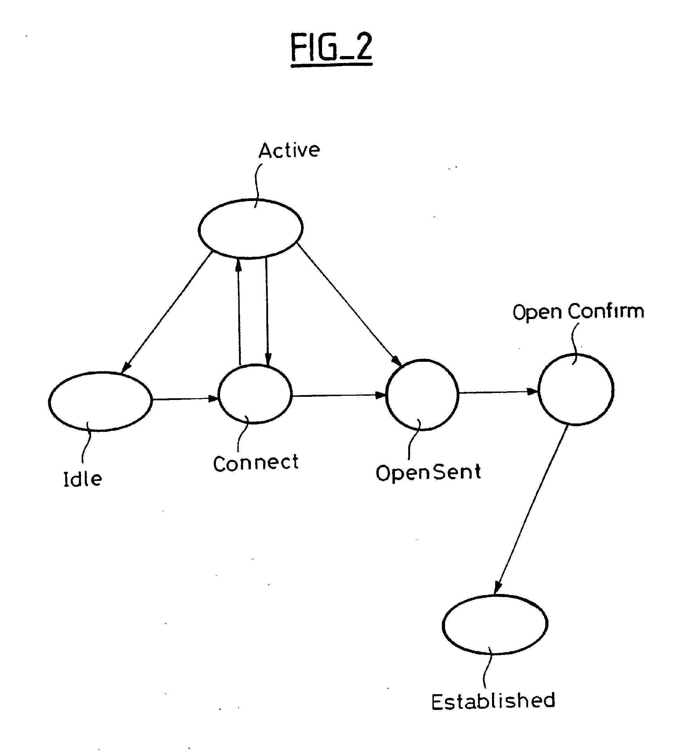

La figure 2 illustre une telle machine à états finis.

Le premier état est l'état « Idle ». C'est l'état initial dans lequel démarre la machine à états finis. Dans cet état, le système de routage ne possède que des informations de base sur le pair.
Selon une mise en oeuvre de l'invention, ces informations de base sont mémorisées, afin de pouvoir être prises en compte lors d'un basculement vers un module de routage en veille.
Ces informations de base peuvent comprendre
- L'adresse IP (*Internet Protocol*) du pair,
- Son identifiant,
- L'état de sa machine à états (plus précisément, de la machine à états qui lui est associé)

A la réception d'un événement « Start », la machines à états finis passe dans un état « Connect ». Une connexion au niveau du protocole de transport est alors initiée avec le routeur pair.
Selon une mise en oeuvre de l'invention, ce protocole de transport est un protocole TCP (*Transport Control Protocol*) tolérant aux fautes. Il existe de nombreux protocoles TCP tolérant aux fautes. On peut citer celui décrit dans l'article « Wrapping Server-Side TCP to Mask Connection Failures » de Lorenzo Alvisi, Thomas C. Bressoud, A. EI-Khashab, K. Marzullo, et D. Zagorodnov), Technical Report, Department of Computer Sciences, The University of Texas, Austin, Juillet 2000.
On peut aussi citer le protocole HydraNet-FT, décrit notamment dans l'article « Hydranet-FT: Network Support for Dependable Services » de G. Shenoy, S. Satapati et Riccardo Bettati, paru dans le compte-rendu « Proceedings of the 20th International Conférence on Distributed Computing Systems », Mai 2000.

En cas d'échec, la machine à états finis passe dans l'état « Active » qui consiste à attendre une connexion TCP de la part du pair. Au bout d'un certain temps, si aucune tentative de connexion TCP n'a aboutit, la machine à états finis repasse dans l'état « Connect » afin de re-initier une tentative de connexion TCP.

Lorsqu'une connexion TCP est finalement établie, le module de routage transmet un message « Open » et la machine à états finis passe dans l'état « OpenSent ».
Dans cet état, le module de routage attend la réception d'un message « Open » du pair. A la réception d'un tel message, la machine à états finis passe dans l'état « OpenConfirm ».
Dans cet état, la machine à états finis attend la réception d'un message « KeepAlive ». Ces messages « KeepAlive » sont régulièrement échangés par les modules de routage inter systèmes autonomes afin de s'informer mutuellement qu'ils sont toujours opérationnels.
A la réception d'un message « KeepAlive », la connexion est considérée comme établie et la machine à états finis passe dans l'état « Established ».
Dans cet état, la machine à états finis reçoit des messages « KeepAlive » et des messages « Update ». Ces messages « Update » contiennent des informations de routage, c'est-à-dire des nouvelles routes, ou des annulations de route.

Selon l'invention, à chaque changement d'états, on mémorise ce nouvel état de sorte que le module de routage en veille puisse démarrer directement dans cet état.
Ainsi, il n'est pas nécessaire de repasser par la succession d'états qui vient d'être décrite, et le basculement d'un module de routage à un autre est transparent pour le pair.

Selon une mise en oeuvre de l'invention, outre les informations de base qui sont mémorisées lorsque la machine à états finis est dans l'état « Idle », on mémorise aussi les informations de routage reçus du routeur pair (que ce soit des nouvelles routes ou des annulations de route).

Cette mémorisation peut être réalisée au moyen d'une mémoire partagée par le module de routage actif et le ou les modules de routage en veille.
D'autres modes de réalisation sont bien évidemment possibles et à la portée de l'homme du métier. Notamment, les modules de routage peuvent communiquer via un moyen de communication inter-processus. Ce moyen de communication inter-processus peut par exemple être un bus logiciel, tel le bus logiciel CORBA conforme aux spécifications de l'OMG (*Object* Management Group). L'étape de mémorisation peut alors être précédée d'une étape d'émission des informations vers le ou les modules de routage en veille, à charge pour eux de mémoriser ces informations de sorte qu'ils puissent les récupérer lors d'un basculement d'états.

Lorsque le module de routage à l'état actif s'arrête (soit du fait d'un arrêt programmé, soit du fait d'une défaillance), un des modules de routage en veille devient actif. Il peut alors prendre en compte les informations mémorisées par le module de routage précédemment actif.
D'une part, l'état de la machine à états finis associée au module de routage nouvellement actif peut être forcé à l'état mémorisé (donc à l'état du module de routage précédemment actif avant son arrêt).
D'autre part, le module de routage nouvellement actif peut prendre en compte les informations sur le routeur pair (comme évoqué précédemment, son adresse IP etc.), et les informations de routage reçues de lui.

## Revendications

1. Système de routage (BR1) inter systèmes autonomes connecté à des routeurs pairs (BR2, BR3), ledit système de routage comportant, pour chaque routeur pair, au moins deux modules de routage permettant le routage inter systèmes autonomes (AS1, AS2, AS3), un seul module de routage étant dans un état actif à un instant donné, le ou les autres modules de routage étant dans un état de veille, et un moyen permettant de basculer le ou un desdits autres modules de routage d'un état de veille à un état actif lors de l'arrêt du module de routage à l'état actif, chacun desdits modules de routage comportant un moyen pour, à l'état actif, mémoriser des informations relatives à son état et au routeur pair associé, et un moyen pour récupérer lesdites information lors d'un basculement dudit module de routage vers l'état actif, le système une portant en outre une mémoire partagée par le module de routage actif et le ou les modules de routage en veille pour réaliser ladite mémorisation et ladite récupération des informations.

2. Système de routage (BR1) selon la revendication 1, dans lequel lesdits modules de routage sont conformes à un protocole de type BGP.

3. Système de routage (BR1) selon la revendication 1 ou 2, **caractérisé en ce qu'**il comporte un bus logiciel CORBA pour faire communiquer les modules de routage.

4. Système de routage (BR1) selon la revendication 1 ou 2, dans lequel lesdites informations comprennent l'état de la machine à états finis associée audit module de routage, le module de routage basculant à l'état actif étant forcé dans cet état.

5. Système de routage (BR1) selon la revendication précédente, dans lequel lesdites informations comprennent de surcroît des informations sur le routeur pair associé (BR2, BR3) et les informations de routage reçues dudit routeur pair associé (BR2, BR3).

6. Routeur (BR1) comportant un système de routage selon l'une des revendications précédentes.

## Claims

1. A routing system (BR1) between autonomous systems connected to peer routers (BR2, BR3), said routing system comprising, for each peer router, at least two routing modules enabling routing to be performed between autonomous systems (AS1, AS2, AS3), only one of the routing modules being in an active state at any given instant, the other routing module(s) being in a standby state, and means enabling the or one of said other routing modules to switch from a standby state to an active state in the event of the routing module that is in the active state stopping, each of said routing modules has means operative in the active state to store information relating to its state and to the associated peer router, and means for recovering said information when said routing module changes over into the active state, the system further comprising a memory that is shared between the active routing module and the standby routing module(s) in order to perform said storage and said information recovery.

2. A routing system (BR1) according to claim 1, in which said routing modules comply with a BGP type protocol.

3. A routing system (BR1) according to claim 1 or claim 2, **characterized in that** it includes a CORBA software bus allowing the routing modules to communicate.

4. A routing system (BR1) according to claim 1 or claim 2, in which said routing information comprises the state of the finite state machine associated with said routing module, the routing module changing over to the active state being forced into said state.

5. A routing system (BR1) according to the preceding claim, in which said information further comprises information about the associated peer router (BR2, BR3) and the routing information received from said associated peer router (BR2, BR3).

6. A router (BR1) including a routing system according to any preceding claim.

## Patentansprüche

1. System zur Leitweglenkung (BR1) in inter-autonomen Systemen, das mit Peer-Routern (BR2, BR3) verbunden ist, wobei das genannte System zur Leitweglenkung für jeden Peer-Router mindestens zwei Module zur Leitweglenkung umfasst, die die Leitweglenkung in inter-autonomen Systemen (AS1, AS2, AS3) gewährleisten, wobei sich zu einem bestimmten Zeitpunkt jeweils nur ein einziges Modul zur Leitweglenkung im aktiven Status befindet, wobei sich das oder die anderen Module zur Leitweglenkung im Bereitschaftsstatus befinden und ein Mittel die Möglichkeit bietet, das oder die genannten anderen Module zur Leitweglenkung vom Bereitschaftsstatus in den aktiven Status umzuschalten, wenn das Modul zur Leitweglenkung im aktiven Status abschaltet, wobei jedes der genannten Module zur Leitweglenkung ein Mittel umfasst, um im aktiven Status Informationen über seinen Status und den des zugeordneten Peer-Routers zu speichern, sowie ein Mittel, um die genannten Informationen abzurufen, wenn das genannte Modul zur Leitweglenkung in den aktiven Status umschaltet, wobei das System außerdem einen gemeinsamen Speicher für das aktive Modul zur Leitweglenkung und das oder die Module zur Leitweglenkung im Bereitschaftsstatus umfasst, um die genannte Speicherung und den genannten Abruf der Informationen auszuführen.

2. System zur Leitweglenkung (BR1) gemäß Anspruch 1, in dem die genannten Module zur Leitweglenkung einem Protokoll vom Typ BGP entsprechen.

3. System zur Leitweglenkung (BR1) gemäß Anspruch 1 oder 2, **dadurch gekennzeichnet, dass** es einen Software-Bus CORBA umfasst, damit die Module zur Leitweglenkung miteinander kommunizieren können.

4. System zur Leitweglenkung (BR1) gemäß Anspruch 1 oder 2, in dem die genannten Informationen den Status der Maschine mit festen Zuständen umfassen, der dem genannten Modul zur Leitweglenkung zugeordnet ist, wobei das Modul zur Leitweglenkung, das in den aktiven Zustand umschaltet, auf diesen Status gesetzt wird.

5. System zur Leitweglenkung (BR1) gemäß dem vorgenannten Anspruch, in dem die genannten Informationen zudem Informationen über den zugeordneten Peer-Router (BR2, BR3) und die von dem genannten zugeordneten Peer-Router (BR2,BR3) empfangenen Informationen zur Leitweglenkung umfassen.

6. Router (BR1), der ein System zur Leitweglenkung gemäß einem der vorgenannten Ansprüche umfasst.
